(19)

**Europäisches Patentamt**
**European Patent Office**
**Office européen des brevets**

(11) **EP 4 603 449 A1**

(12) **EUROPEAN PATENT APPLICATION**
published in accordance with Art. 153(4) EPC

(43) Date of publication:
**20.08.2025 Bulletin 2025/34**

(21) Application number: **23877734.6**

(22) Date of filing: **13.10.2023**

(51) International Patent Classification (IPC):
*C01B 32/306* (2017.01)   *C01B 32/372* (2017.01)
*B01J 20/30* (2006.01)   *B01J 20/20* (2006.01)

(52) Cooperative Patent Classification (CPC):
**B01J 20/20; B01J 20/30; C01B 32/306;**
**C01B 32/372**

(86) International application number:
**PCT/KR2023/015797**

(87) International publication number:
**WO 2024/080811 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **13.10.2022 KR 20220131713**

(71) Applicants:
• **Hanwha Solutions Corporation**
**Jung-gu**
**Seoul 04541 (KR)**
• **Korea Advanced Institute of Science and**
**Technology**
**Daejeon 34141 (KR)**

(72) Inventors:
• **KIM, Do Heung**
**Seoul 04541 (KR)**
• **JEON, Hyojin**
**Seoul 04541 (KR)**
• **KIM, Euiduk**
**Seoul 04541 (KR)**
• **PARK, Sarang**
**Seoul 04541 (KR)**
• **IM, Sung Gap**
**Seoul 04541 (KR)**
• **CHOI, Keonwoo**
**Seoul 04541 (KR)**
• **JANG, Wontae**
**Seoul 04541 (KR)**

(74) Representative: **Berggren Oy**
**P.O. Box 16**
**Eteläinen Rautatiekatu 10A**
**00101 Helsinki (FI)**

(54) **METHOD FOR MODIFYING CARBON MOLECULAR SIEVE**

(57)    The present disclosure is intended to provide a modification method capable of controlling the micropore size of a carbon molecular sieve. The method for modifying a carbon molecular sieve, according to an embodiment of the present invention, may: introduce an effective inorganic thin film into the pores of the carbon molecular sieve; be performed under lower temperature conditions compared to a conventional CVD process while still uniformly forming a thin film; control changes in the amount of adsorption depending on the type of gas, through fine control of the pore sizes of the carbon molecular sieve; accordingly, increase the selectivity of separation that depends on the type of gas; and minimize the trade-off of significant reduction in the specific surface area, thereby maximizing the gas adsorption capacity even when the pore size of the carbon molecular sieve is reduced.

[FIG. 1]

**EP 4 603 449 A1**

**Description**

**TECHNICAL FIELD**

The present disclosure relates to a method for modifying a carbon molecular sieve. Specifically, the present disclosure relates to a method for modifying a carbon molecular sieve to control the pore size of a carbon molecular sieve.

**BACKGROUND**

Carbon molecular sieve (CMS), a special grade of activated carbon (AC), is a carbon material with microscopic pores measuring several or several tens of Å in size. Carbon molecular sieves are microporous carbon materials characterized by uniform and narrow distribution of micropore sizes, and are attracting attention as materials that exhibit high permeability and selectivity performance. Carbon molecular sieves are mainly used for gas separation through the pressure swing adsorption (PSA) process and are used as adsorbents in the form of pellets or powder. The gas permeation, separation, and adsorption performance of these carbon molecular sieves are determined by the size and shape of the micropores present within them.

Conventionally, various attempts have been made using carbon CVD using benzene, methane, or the like in order to control micropores existing in carbon molecular sieves. However, there is a problem that it is difficult to control diffusion and reaction inside the pores due to the difficulty in controlling process variables under high process temperature conditions requiring more than 600°C for carbon CVD, and the technical difficulty is very high. As such, it is extremely difficult to precisely control the micropores within carbon molecular sieves, and in addition, in the case of the existing thermal CVDprocess, minimizing the trade-off of a significant decrease in the specific surface area along with the control of the pore size remains an issue that must be resolved. Therefore, there is a need for a new concept of pore modification technology that solves the above problems.

**DISCLOSURE**

**TECHNICAL PROBLEM**

The present disclosure is intended to provide a modification method capable of controlling the micropore size of a carbon molecular sieve.

**TECHNICAL SOLUTION**

The present invention provides a method for modifying a carbon molecular sieve, the method performing a cycle 2 or more times, the cycle including: introducing a carbon molecular sieve and first precursors into a reaction chamber, thereby forming a first precursor multilayer in which at least a portion of the first precursors is adsorbed into pores of the carbon molecular sieve (step 1); purging the inside of the reaction chamber to remove unadsorbed first precursors from the first precursor multilayer to form a first precursor monolayer (step 2); introducing second precursors into the reaction chamber to react the first precursor monolayer with at least a portion of the second precursors to form a composite layer (step 3); and purging the inside of the reaction chamber to remove unreacted second precursors from the composite layer to form an inorganic thin film (step 4).

According to one embodiment of the present invention, the step 1 may include a step of introducing a carbon molecular sieve and first precursors into a reaction chamber (step 1-1), and a step of impregnating the first precursors into the carbon molecular sieve to form a first precursor multilayer having at least a portion of the first precursors adsorbed thereon (step 1-2).

In addition, the step 3 may include a step of introducing second precursors into the reaction chamber (step 3-1), and a step of impregnating the second precursors into a carbon molecular sieve in which a first precursor monolayer is formed in pores thereof, thereby forming a composite layer in which the first precursor monolayer and at least a portion of the second precursors are reacted (step 3-2).

In addition, in the step 1-2, the time for impregnating the first precursors may be 1 to 630 seconds and the pressure may be 1 to 10 torr.

In addition, in the step 3-2, the time for impregnating the second precursors may be 1 to 630 seconds and the pressure may be 1 to 10 torr.

In addition, in the step 1, the introduction of the first precursors may be performed for 1 to 600 seconds.

In addition, in the step 3, the introduction of the second precursors may be performed for 1 to 600 seconds.

In addition, the purging of the steps 2 and 4 may be performed independently for 1 to 600 seconds, respectively.

In addition, during the above cycle, the temperature of the carbon molecular sieve may be maintained at 80 to 300°C.

In addition, the first precursor may include at least one selected from the group consisting of trimethyl aluminum, diethylzinc, zinc acetate, tetrakis(dimethylamino)tin(IV), butoxytris(ethylmethylamido)hafnium, titanium isopropoxide, and diisopropylaminosilane.

In addition, the second precursor may include at least one selected from the group consisting of $H_2O$, $O_3$, $H_2O$ plasma, $O_3$ plasma, and $O_2$ plasma.

In addition, in one or more of the steps 2 and 4, the gas used for purging may include nitrogen ($N_2$) or argon (Ar).

In addition, the cycle may be performed 2 to 320 cycles.

## ADVANTAGEOUS EFFECT

The carbon molecular sieve modified according to an exemplary embodiment of the present disclosure can form an inorganic material thin film on the pore surface thereof.

The method according to an exemplary embodiment of the present disclosure can control the change in adsorption quantity according to the type of gas through fine control of the pore size, and thus the separation selectivity according to the type of gas can be increased.

The method according to an exemplary embodiment of the present disclosure can be performed at lower temperature conditions than conventional chemical vapor deposition (CVD) methods, and the process can be precisely controlled.

The method according to an exemplary embodiment of the present disclosure can maximize the gas adsorption capacity even when the pore size is reduced by minimizing the trade-off of significant reduction in the specific surface area.

The method according to an exemplary embodiment of the present disclosure can control the pores of a carbon molecular sieve to effectively sieve various gas molecules according to their sizes.

The method according to an exemplary embodiment of the present disclosure control the pore size of a carbon molecular sieve at the angstrom (Å) level, and in particular, can control the pore size distribution in the micropore region.

The method according to an exemplary embodiment of the present disclosure can introduce an effective inorganic thin film into the pores of a carbon molecular sieve and form the thin film more uniformly than the existing CVD process.

## BRIEF DESCRIPTION OF THE DRAWINGS

FIG. 1 shows a gas adsorption quantity measured in Experimental Example 1.

FIG. 2 shows the pore volume distribution according to the pore width of Experimental Example 1 measured using the H-K model.

FIG. 3 shows the pore volume distribution according to the pore width of Experimental Example 1 measured using the NLDFT model.

FIG. 4 shows a graph measuring the BET surface area of Experimental Example 1.

FIG. 5 shows an H-K median pore width graph of Experimental Example 1.

FIG. 6 shows a gas adsorption quantity measured in Experimental Example 2.

FIG. 7 shows the pore volume distribution according to the pore width of Experimental Example 2 measured using the H-K model.

FIG. 8 shows the pore volume distribution according to the pore width of Experimental Example 2 measured using the NLDFT model.

FIG. 9 shows a graph measuring the BET surface area of Experimental Example 2.

FIG. 10 shows an H-K median pore width graph of Experimental Example 2.

FIG. 11 shows a gas adsorption quantity measured in Experimental Example 3.

FIG. 12 shows the pore volume distribution according to the pore width of Experimental Example 3 measured using the H-K model.

FIGS. 13a and 13b show the pore volume distribution according to the pore width of Experimental Example 3 measured using the NLDFT model.

FIG. 14 shows a graph measuring the BET surface area of Experimental Example 3.

FIG. 15 shows an H-K median pore width graph of Experimental Example 3.

FIG. 16 shows the adsorption selectivity of $N_2$ gas and $O_2$ gas in Experimental Example 4.

FIG. 17 shows gas adsorption data using $CO_2$ in Experimental Example 4.

FIG. 18 shows a graph of a gas adsorption quantity of Experimental Example 5.

FIG. 19 shows a BET surface area graph of Experimental Example 5.

FIG. 20 shows the pore volume distribution according to the pore width of Experimental Example 5 measured using the NLDFT model.

FIG. 21 shows the pore volume distribution according to the pore width of Experimental Example 5 measured using the H-K model.

FIG. 22 shows an H-K median pore width graph of Experimental Example 5.

FIG. 23 shows a gas adsorption quantity and BET surface area of Experimental Example 6.

FIG. 24 shows the pore volume distribution according to the pore width of Experimental Example 6 measured using the NLDFT model.

FIG. 25 shows the pore volume distribution according to the pore width of Experimental Example 6 measured using the H-K model.

FIG. 26 shows an H-K median pore width graph of Experimental Example 6.

## BEST MODES FOR CARRYING OUT THE INVENTION

In the present invention, terms such as first and second are used to describe various components, and the above terms are used only for the purpose of distinguishing one component from another.

In addition, the terms used herein are used only to illustrate exemplary embodiments and are not intended to limit the present invention. Expressions in the singular include plural expressions unless the context clearly indicates otherwise. It should be understood that the terms "comprise or include", "provide" or "have" or the like in this specification, are intended to specify the presence of implemented features, numbers, steps, components and/or a combination thereof but not preclude the possibility of the presence or addition of one or more other features, numbers, steps, components, or a combination thereof.

In addition, in the present invention, when each layer or element is referred to as being formed "on" or "over" respective layers or elements, it means that each layer or element is directly formed on each layer or element, or another layer or element may be additionally formed between each layer, on an object, or on a substrate.

The present invention may have various modifications and may take various forms, and specific embodiments thereof are exemplified and described in detail below. However, it is not intended to limit the present invention to any particular form disclosed, and it shouldbe understood that the scope of the present invention includes all modifications, equivalents and substitutes included in the idea and scope of the present invention.

The term molecular sieve is the trade name for synthetic zeolite manufactured industrially by Linde, an American company. Molecular sieves have a large number of thin pores with uniform diameters and thus possess excellent adsorptive power, and as their name suggests, they can have the function of sieving molecules. Nowadays, the term molecular sieve has become a colloquial term and is used as a scientific term to refer to a porous material with three-dimensionally aligned pores of uniform size. Molecular sieves exhibit selectivity toward molecules of a specific size due to their uniform pore size, and therefore can be widely applied as catalysts, catalyst carriers, and adsorbents.

Carbon molecular sieve (CMS) is a molecular sieve whose main component is carbon. Carbon molecular sieves have many advantages over metal oxide molecular sieves such as zeolites, including high thermal stability, hydrothermal stability, chemical resistance, and organophilicity. Carbon molecular sieves can also be applied in various applications such as catalyst carriers, adsorbents, sensors, and electrode materials. Depending on the pore size of the carbon molecular sieve, gases are classified into those that are affected by the sieving effect and those that are not. For example, since the kinetic diameter of methane is 3.8 °Å (0.38 nm) and the kinetic diameter of nitrogen is 3.64 °Å (0.364 nm), a carbon molecular sieve with a pore size in between can be used as the most effective methane/nitrogen molecular sieve. The process of synthesizing carbon molecular sieves usually involves a pyrolysis process, and methods are being devised to increase the pore size and porosity through pyrolysis temperature control and post-pyrolysis process treatment with oxygen, etc., but there is a limit to the increase.

Accordingly, the inventors of the present invention attempted to finely adjust the pore size of the carbon molecular sieve while maintaining a specific surface area by applying atomic layer deposition (ALD), which is a separate process, to the prepared carbon molecular sieve.

Atomic layer deposition (ALD) offers many advantages over traditional deposition methods. ALD has the advantage of providing precise thickness control, excellent conformality, and uniformity over a large area by relying on self-limiting surface reactions. Atomic layer deposition is mainly used in semiconductor wafer processes, where the ALD process comprises a cycle that includes the following sequential steps: 1) a step of adsorbing a precursor on the surface of a substrate; 2) a step of purging excess precursor molecules in a gas phase; 3) a step of introducing a reactant that reacts with the precursor on the surface of the substrate; and 4) a step of purging excess reactant. By performing the above steps as one cycle, the deposition thickness can be accurately controlled by counting the number of cycles.

A method for modifying a carbon molecular sieve according to an exemplary embodiment of the present invention performs a cycle 2 or more times, the cycle including a step of introducing a carbon molecular sieve and first precursors into a reaction chamber, thereby forming a first precursor multilayer in which at least a portion of the first precursors is adsorbed into pores of the carbon molecular sieve (step 1), a step of purging the inside of the reaction chamber to remove unadsorbed first precursors from the first precursor multilayer to form a first precursor monolayer (step 2), a step of introducing second precursors into the reaction chamber to react the first precursor monolayer with at least a portion of the second precursors to form a composite layer (step 3), and a step of purging the inside of the reaction chamber to remove unreacted second precursors from the composite layer to form an inorganic thin film (step 4).

In the step 1, first precursors are introduced into a reaction chamber together with a carbon molecular sieve, and at least some of the introduced first precursors are adsorbed into the pores of the carbon molecular sieve, and the first precursors that are not adsorbed are laminated into a multilayer, thereby forming the first precursor multilayer. In the subsequent step 2, by purging the inside of the reaction chamber, the unadsorbed first precursors in the first precursor multilayer may be removed, so that only the first precursor layer adsorbed on the pore surface of the carbon molecular sieve remains, thereby forming the first precursor monolayer. Then, in the step 3, second precursors are introduced into the reaction chamber, and the first precursor monolayer and at least a portion of the second precursors are reacted, and the second precursors that are not reacted with the first precursor monolayer are disposed on the reactants, thereby forming the composite layer. In the subsequent step 4, by purging the inside of the reaction chamber, unreacted second precursors that are not reacted with the first precursor monolayer in the composite layer may be removed, thereby forming the inorganic thin film on the pore surface of the carbon molecular sieve.

In addition, the present invention performs the steps 1 to 4 as one cycle and performs the cycle two or more times.

Meanwhile, preferably, the cycle may be performed 2 to 320 cycles, and more preferably, the cycle may be performed 2 to 200 cycles. If the above cycle is performed less than 2 times, there may be a problem that the pores of the carbon molecular sieve are hardly modified due to insufficient deposition, and if the above cycle is performed more than 320 cycles, a large number of closed pores may occur among the pores of the carbon molecular sieve, which may result in a problem of greatly reduced surface area and lowered adsorption efficiency.

According to one embodiment of the present invention, the step 1 may include a step of introducing a carbon molecular sieve and first precursors into a reaction chamber (step 1-1), and a step of impregnating the first precursors into the carbon molecular sieve to form a first precursor multilayer having at least a portion of the first precursors adsorbed thereon (step 1-2).

The impregnation in the above step 1-2 is performed by stopping the introduction of the first precursors introduced into the reaction chamber and maintaining the state for a predetermined period of time, so that by performing the impregnation step, the first precursor multilayer may be uniformly formed in the pores of the carbon molecular sieve, and the first precursor multilayer may also be formed in the pores inside the carbon molecular sieve, thereby providing sufficient time for the precursors to be delivered into the micropores inside the carbon molecular sieve, the pore size of the carbon molecular sieve may be controlled more effectively and uniformly.

In this case, the time for impregnating the first precursors may be 1 to 630 seconds and the pressure may be 1 to 10 torr, and preferably, the time for impregnating the first precursors may be 50 to 600 seconds and the pressure may be 2 to 8 torr. As the time and pressure range for impregnating the first precursors are satisfied, the first precursor multilayer is uniformly formed in the pores of the carbon molecular sieve, and the first precursor multilayer is also formed in the pores inside the carbon molecular sieve, thereby giving the first precursors sufficient time to be delivered into the micropores inside the carbon molecular sieve, which may be more advantageous in terms of effectively and uniformly controlling the pore size of the carbon molecular sieve.

In addition, according to one embodiment of the present invention, the step 3 may include a step of introducing second precursors into the reaction chamber (step 3-1), and a step of impregnating the second precursors into a carbon molecular sieve in which a first precursor monolayer is formed in pores thereof, thereby forming a composite layer in which the first precursor monolayer and at least a portion of the second precursors are reacted (step 3-2).

The impregnation in the above step 3-2 is performed by stopping the introduction of the second precursors introduced into the reaction chamber and maintaining the state for a predetermined period of time, so that by performing the impregnation step, the composite layer may be uniformly formed on the first precursor monolayer on the pores of the carbon molecular sieve, and the composite layer may also be formed on the first precursor monolayer on the pores inside the carbon molecular sieve, thereby providing sufficient time for the precursors to be delivered into the micropores inside the carbon molecular sieve, the pore size of the carbon molecular sieve may be controlled more effectively and uniformly.

In this case, the time for impregnating the second precursors may be 1 to 630 seconds and the pressure may be 1 to 10 torr, and preferably, the time for impregnating the second precursors may be 50 to 600 seconds and the pressure may be 2 to 8 torr. As the time and pressure range for impregnating the second precursors are satisfied, the composite layer is uniformly formed on the first precursor monolayer on the pores of the carbon molecular sieve, and the composite layer is also formed on the first precursor monolayer on the pores inside the carbon molecular sieve, thereby giving the second precursors sufficient time to be delivered into the micropores inside the carbon molecular sieve, which may be more advantageous in terms of effectively and uniformly controlling the pore size of the carbon molecular sieve.

Meanwhile, the introduction of the first precursors in the step 1 may be performed for 1 to 600 seconds, and the introduction of the second precursors in the step 3 may be performed for 1 to 600 seconds.

Specifically, the precursor introduction times of the steps 1 and 3 may each independently be 1 second or more, 2 seconds or more, 5 seconds or more, 10 seconds or more, or 15 seconds or more to 600 seconds or less, 300 seconds or less, 100 seconds or less, 50 seconds or less, or 20 seconds or less.

The pore size of the carbon molecular sieve may be controlled according to the type of gas to be selected by controlling the precursor introduction time within the above range. However, if the precursor introduction time is less than 1 second, pore control may not be effective due to incomplete atomic layer deposition, and if it exceeds 600 seconds, many closed pores may occur among the pores of the carbon molecular sieve, which may greatly reduce the surface area and lower the adsorption efficiency.

The purging times of the steps 2 and 4 may each be independently 1 to 1000 seconds, and for example, the purging times of the steps 2 and 4 may each independently be 1 second or more, 5 seconds or more, 10 seconds or more, 15 seconds or more, 30 seconds or more, or 60 seconds or more to 1000 seconds or less, 900 seconds or less, 800 seconds or less, 700 seconds or less, or 600 seconds or less.

If the purging time is too short, residues of the precursor may remain, causing a thicker inorganic oxide thin film to be deposited than the intended thickness, and if the purging time exceeds the above range, it may cause a decrease in process efficiency.

During the above cycle, the temperature of the carbon molecular sieve may be maintained at 80 to 300°C, and preferably, the temperature of the carbon molecular sieve may be maintained at 90 to 190°C.

The pore size of the carbon molecular sieve may be controlled according to the type of gas to be selected by controlling the temperature of the carbon molecular sieve within the above range. If the temperature of the carbon molecular sieve is lower than 80°C, defects may occur in the formed inorganic film due to incomplete reaction, and if the temperature exceeds 300°C, an excessive inorganic thin film may be formed in the pores of the carbon molecular sieve, which may cause the surface area of the carbon molecular sieve to be greatly reduced and the adsorption efficiency to be reduced.

Meanwhile, the inorganic thin film formed in the pores of the carbon molecular sieve by performing the above cycle may include at least one of an oxide of the first precursor and a nitride of the first precursor.

The first precursor may include at least one selected from the group consisting of trimethyl aluminum, diethylzinc, zinc acetate, tetrakis(dimethylamino)tin(IV), butoxytris(ethylmethylamido)hafnium, titanium isopropoxide, and diisopropylaminosilane. Preferably, it may be advantageous for the first precursor to contain trimethyl aluminum in order to achieve the desired effect of the present invention.

The second precursor may be, without limitation, any material capable of reacting with the first precursor to form an oxide or nitride of the first precursor, but may include at least one selected from the group consisting of $H_2O$, $O_3$, $H_2O$ plasma, $O_3$ plasma, and $O_2$ plasma, and thus may be advantageous in achieving the desired effect of the present invention.

The gas used for purging in at least one of the steps 2 and 4 may be used without limitation as long as the gas may be generally used for purging in the art, but preferably may include nitrogen ($N_2$) or argon (Ar).

**MODES OF THE INVENTION**

Hereinafter, preferred examples are presented to help understanding of the invention. However, the following examples are for illustrative purposes only, and the invention is not limited thereto.

Hereinafter, activated carbon was used as a carbon molecular sieve, and the following experimental examples were carried out with the experimental example cycle below as one cycle.

**Experimental Example Cycle**

(Step 1)

The base pressure of a reaction chamber was maintained at a vacuum level of 40 mTorr or less. An activated carbon (carbon molecular sieve) substrate and trimethyl aluminum, which is the first precursor, were introduced into the reaction chamber. In this case, trimethyl aluminum was vaporized outside the reaction chamber and introduced into the reaction chamber in gaseous form (introduction time 2 seconds) to form a first precursor multilayer in which at least a portion of the first precursors was adsorbed into the pores of the carbon molecular sieve.

(Step 2)

Then, the inside of the reaction chamber was purged with nitrogen ($N_2$) gas for 60 seconds to remove the unadsorbed first precursors from the first precursor multilayer, leaving only the first precursor layer adsorbed on the surface of the pores of the carbon molecular sieve, thereby forming a first precursor monolayer.

(Step 3)

Then, second precursor $H_2Os$ were introduced into the reaction chamber to react the first precursor monolayer with at least some of the second precursors to form a composite layer. At this time, the second precursors were also vaporized outside the chamber and introduced in gaseous form, and the introduction time was set to 2 seconds. In this process, the second precursors in contact with the first precursor monolayer reacted, and the unreacted second precursors were placed on the reactants to form a composite layer.

(Step 4)

Next, the inside of the reaction chamber was purged with nitrogen ($N_2$) gas for 60 seconds to remove unreacted second precursors, thereby forming an inorganic thin film (oxide of the first precursor).
The activated carbon temperature was maintained at 150°C during the steps 1 to 4.
In addition, in the experimental examples below, the gas adsorption quantity, pore volume distribution according to pore width, BET surface area, H-K median pore width, and IAST adsorption selectivity were commonly performed using the following methods.

**Gas adsorption quantity**

To measure the gas adsorption amount, the sample was sufficiently degassed at 300°C for 6 hours or more, and then gas adsorption was performed using $N_2$ and Ar gases at approximately -195°C and -185°C, respectively, while changing the relative pressure from $1*e^{-7}$ to 1, using the 3 Flex equipment from Micromeritics, and the quantity of gas adsorbed in the sample was measured in volume.

**Pore volume distribution according to pore width**

The pore size distribution was determined using nonlocal density functional theory (NLDFT) and the Horvath-Kawazoe slit pore model from the isothermal adsorption.

**BET surface area**

The BET surface area was calculated from the isothermal adsorption using the Brunauer-Emmett-Teller equation.

**H-K median pore width**

The H-K median pore width value was determined by calculating the median value from the pore size distribution results using the Horvath-Kawazoe slit pore model.

**IAST adsorption selectivity**

In the following experimental example, the IAST adsorption selectivity is the adsorption selectivity of $O_2$ gas over $N_2$ gas, and the adsorption quantities of $O_2$ and $N_2$ gases were measured under the conditions of 120 kPa and 298.15 K using Belsorp HP equipment. After that, the $O_2$, $N_2$ selectivity in the ideal adsorption solution theory (IAST) in air separation ($N_2$:$O_2$ = 79:21) was calculated using the following equation.

$$IAST \text{ 흡착 선택도}, S_{O_2/N_2} = \frac{Q_{O_2}/P_{O_2}}{Q_{N_2}/P_{N_2}}$$

In the above IAST adsorption selectivity equation, $P_{O_2}$ represents the oxygen gas adsorption pressure, $Q_{O_2}$ represents the oxygen gas adsorption quantity at $P_{O_2}$, $P_{N_2}$ represents the nitrogen gas adsorption pressure, and represents the nitrogen gas adsorption pressure at $P_{N_2}$.

**Experimental Example 1: Confirmation of physical properties according to change in number of atomic layer deposition cycles**

The above experimental example cycle was performed 1, 30, 100, and 300 times, respectively, to obtain modified activated carbon. The gas adsorption quantity, pore volume distribution according to pore width, BET surface area, and H-K median pore width of the modified activated carbon were confirmed by the above method.

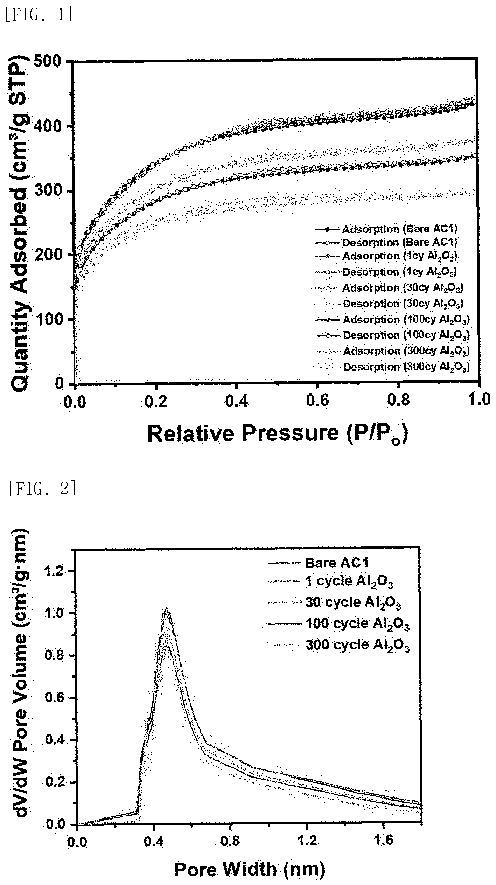

According to FIG. 1, it was confirmed that as the cycle progresses and modification occurs more times, that is, as more precursors are deposited in the pores of the activated carbon, the quantity of gas adsorbed decreases compared to the activated carbon before modification.

Through the graph of FIG. 2 analyzed using the H-K model, it was possible to confirm the change in pores in the micropore region of 2 nm or less. In particular, there was no significant change in the region less than or equal to 0.5 nm, but in the pore region larger than that, an overall decrease in pore size was observed as the number of ALD cycles increased.

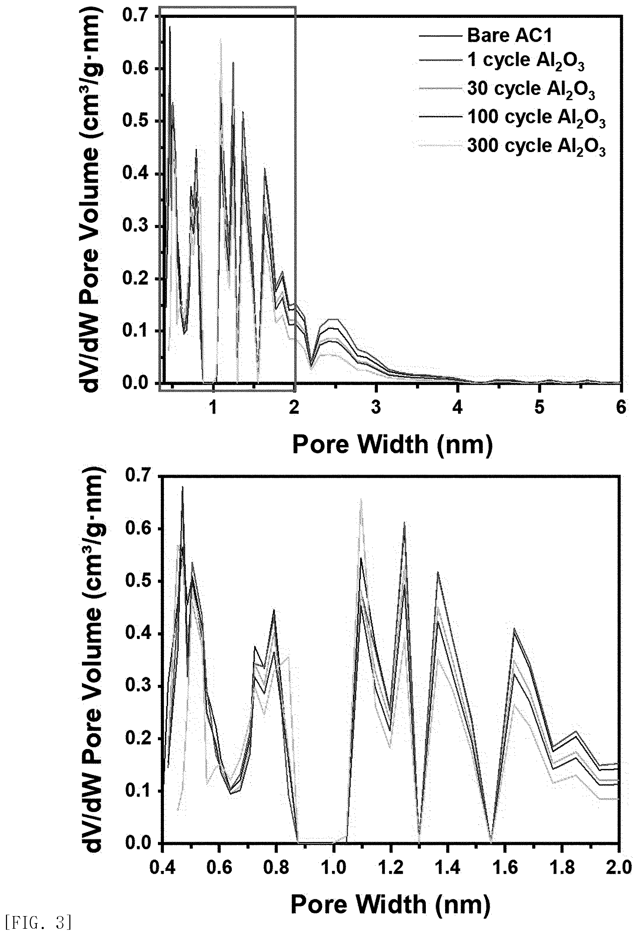

In addition, looking at the graph of FIG. 3 analyzed through the NLDFT model, it was confirmed that the pores decreased overall in the micro to mesopore regions as the process cycle increased. In particular, in the graph that enlarged the micropore region of 2 nm or less, there was no significant change in the ultra-micropore region of 0.5 nm or less, but the micropore region of 1 nm to 2 nm showed a clear decrease, indicating that the proportion of large-sized pores decreased and the proportion of relatively small-sized pores increased as the ALD process was applied. However, when a very thick ALD process of 300 cycles was applied, the ultra-micropore region was significantly reduced, indicating that overall pore closure occurred due to the deposition of excessive $Al_2O_3$ film.

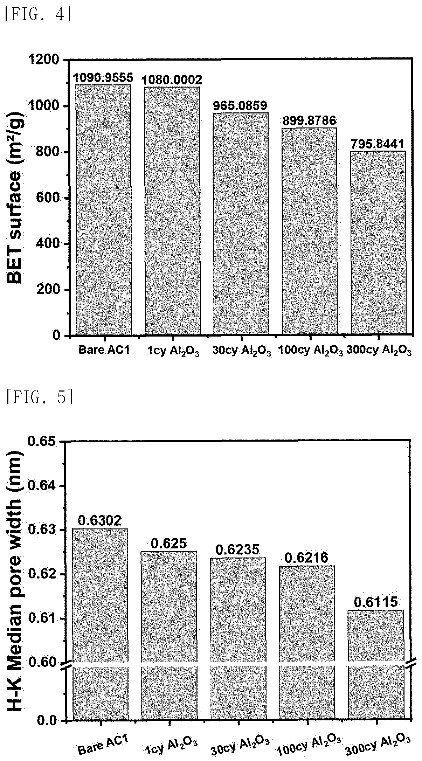

By examining the BET surface area in Fig. 4, it was confirmed that the surface area decreased as the number of cycles increased and modification occurred. In addition, when calculating the median pore width based on the H-K median pore width graph of FIG. 5, it was confirmed that the average width decreased with increasing ALD cycles. In this case, when performing 1 cycle, it was confirmed that there was almost no difference in the specific surface area compared to when the cycle was not performed, but the pore width was greatly reduced.

**Experimental Example 2: Confirmation of physical properties according to precursor injection time**

The experimental example cycle was performed in the same manner as the above experimental example cycle, except that the first precursor injection time was changed to 15 seconds, the second precursor injection time was changed to 15 seconds, and the purging time between each precursor injection was changed to 600 seconds. The experimental example cycle was performed 10 times to obtain modified activated carbon. That is, although the precursor injection time was significantly increased, the number of cycle repetitions was reduced to 1/10, and the overall process time was maintained similar to that of the 100-cycle experiment in Experimental Example 1.

The gas adsorption quantity, pore volume distribution according to pore width, BET surface area, and H-K median pore width of the modified activated carbon were confirmed by the above method.

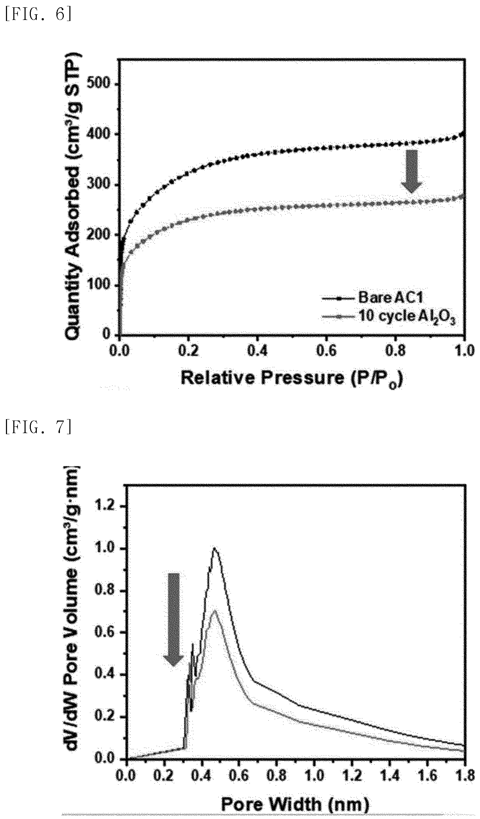

As in Experimental Example 1, after 10 cycles, it was confirmed that the gas adsorption quantity of the modified activated carbon was reduced compared to that of the unmodified activated carbon (see FIG. 6). In addition, it was confirmed that even if the total process time is similar and the total injected precursor quantity is similar, maintaining the precursor injection time for a long time helps the ALD precursor to penetrate into the activated carbon with a complex porous structure, and is effective in depositing into the pores inside the activated carbon.

Through the graph of FIG. 7 analyzed using the H-K model, it was possible to confirm the change in pores in the micropore region of 2 nm or less. In particular, there was no significant change in the region less than or equal to 0.4 nm, but in the pore region larger than that, an overall decrease in pore size was observed as the number of ALD cycles increased. This means that even pores of a slightly smaller size than in Experimental Example 1 were reduced in size by a large margin, and it appeared that pore control was possible over a wider range overall.

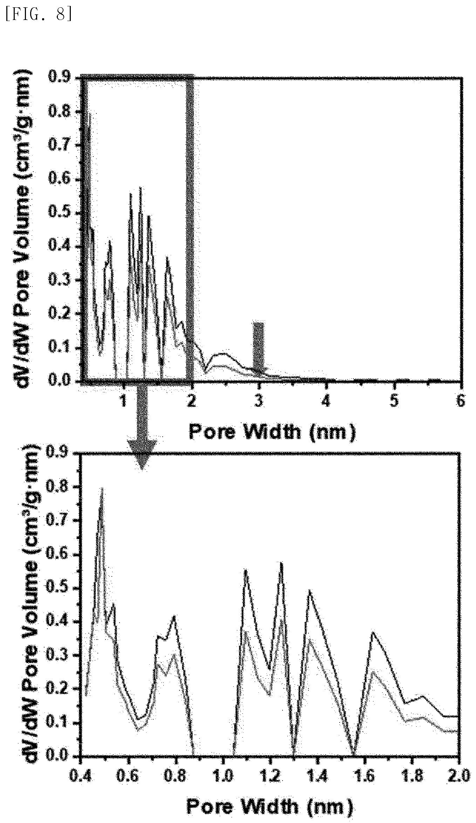

In addition, in the graph of FIG. 8 analyzed through the NLDFT model, it can be confirmed that the volume of micropores and mesopores larger than 0.5 nm is effectively reduced, and the volume of ultra-micropores smaller than 0.5 nm is maintained.

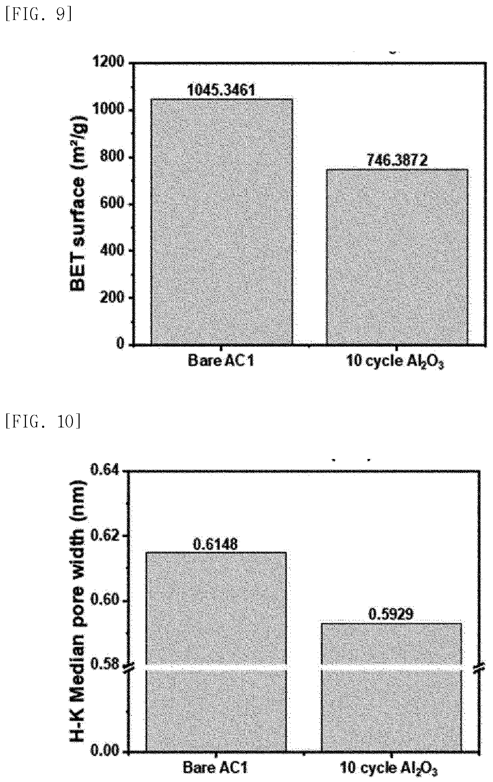

It was confirmed that the BET surface area of FIG. 9 also showed that the surface area of the modified activated carbon was reduced compared to that of the unmodified activated carbon.

In addition, when the median value of the pore width based on the H-K median pore width graph of FIG. 10 was calculated, an average width reduction similar to that of the 300 cycle process of Experimental Example 1 was confirmed in the ALD process of 10 cycles.

In particular, when Experimental Example 1 and Experimental Example 2 were compared, it was confirmed that the change in injection time affects the gas adsorption quantity and the BET surface area. It was thought that the longer the injection time, the more evenly distributed and deposited in the carbon precursor, which has an effect.

**Experimental Example 3: Confirmation of physical properties depending on whether precursor impregnation step is included**

First, the physical properties of unmodified activated carbon and modified activated carbon by adding a precursor impregnation step to the experimental example cycle were compared.

In the method for modifying including the precursor impregnation step of this experiment, the same procedure as the experimental example cycle was carried out except that a step of increasing the pressure for 24 seconds to reach a chamber pressure of 5 torr after introducing the first precursors in (step 1) and then impregnating for 600 seconds, and a step of increasing the pressure for 27 seconds to reach a chamber pressure of 5 torr after introducing the second precursors in (step 3) and then impregnating for 600 seconds were further included, and the purging time in (step 2) and (step 4) was set to 10 seconds, and a step of evacuating the reaction chamber for 60 seconds without purging was added.

The activated carbon was modified by performing five experimental example cycles including the impregnation step. Afterward, the gas adsorption quantity, pore volume distribution according to pore width, BET surface area, and H-K median pore width of the modified activated carbon were confirmed by the above method.

In addition, the impregnation pressure was changed from 5 torr to 0.5 torr, 1 torr, and 3 torr, respectively, and the physical properties were measured after manufacturing, and the impregnation time was changed from 600 seconds to 0.5 seconds, 300 seconds, and 1200 seconds, respectively, and the physical properties were measured after manufacturing.

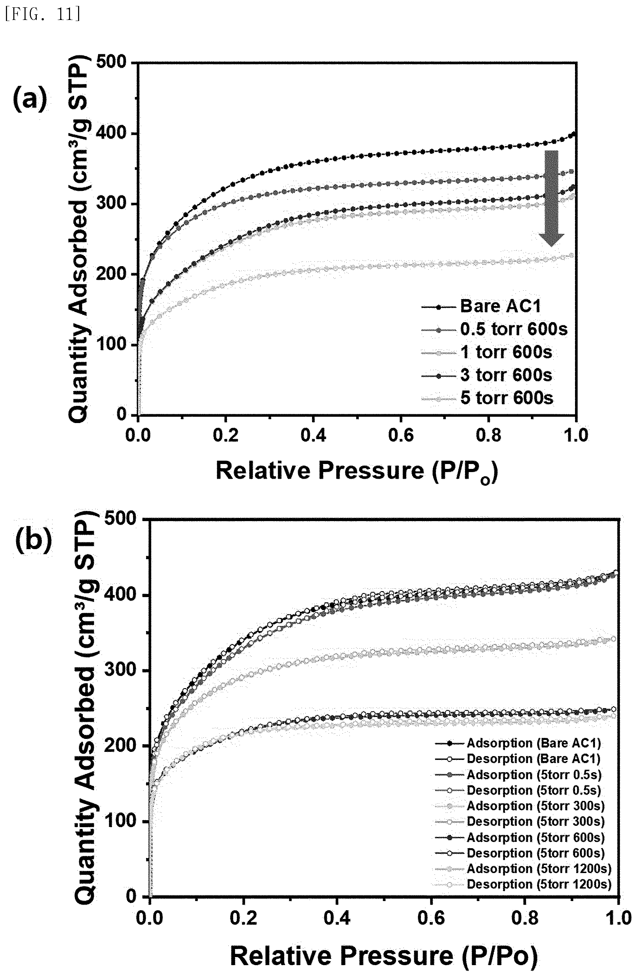

As a result, it was confirmed that the gas adsorption quantity of the modified activated carbon was reduced compared to that of the unmodified activated carbon by performing an experimental example cycle including an impregnation step as shown in FIG. 11a and FIG. 11b, and it was confirmed that the higher the impregnation pressure and the longer the impregnation time, the more the quantity of gas adsorbed decreased. In addition, it was confirmed that when the impregnation pressure was 0.5 torr and the impregnation time was 0.5 seconds, the difference in the quantity of adsorbed gas compared to when it was not performed was minimal.

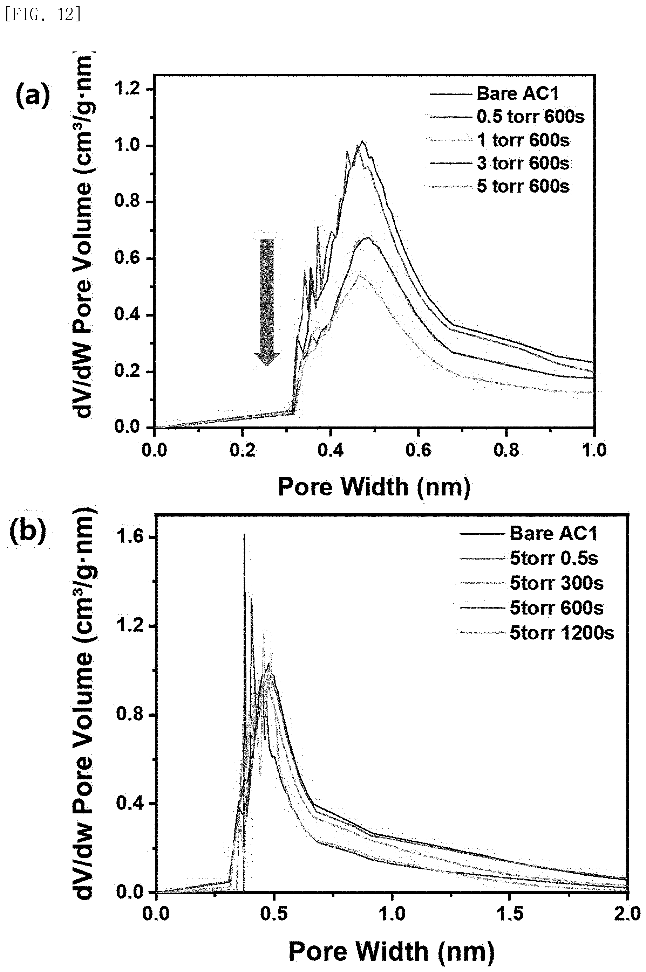

As in Experimental Example 2, through the graph of FIG. 12a and FIG. 12b analyzed using the H-K model, it was possible to confirm the change in pores in the micropore region of 2 nm or less. In particular, there was no significant change in the region less than or equal to 0.3 nm, but in the pore region larger than that, an overall decrease in pore size was observed as the impregnation pressure and impregnation time increased. This confirmed that, compared to Experimental Example 2, even slightly smaller pores were reduced significantly, and that pore control was possible over a wider range overall.

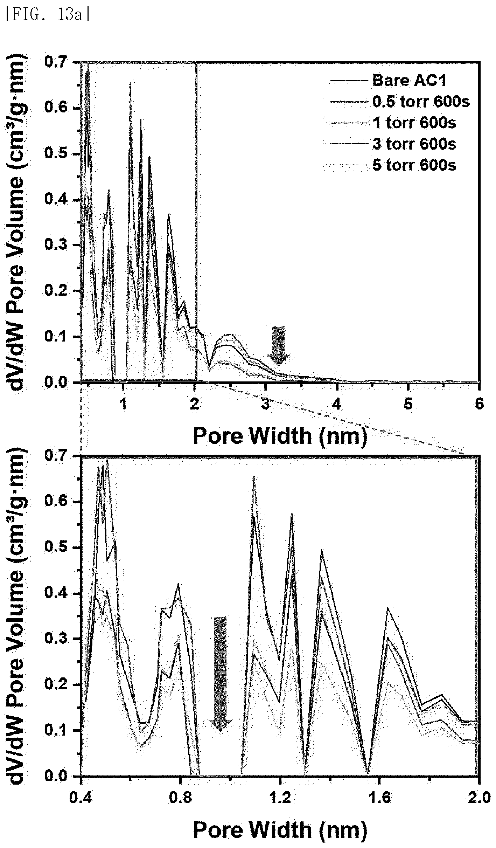

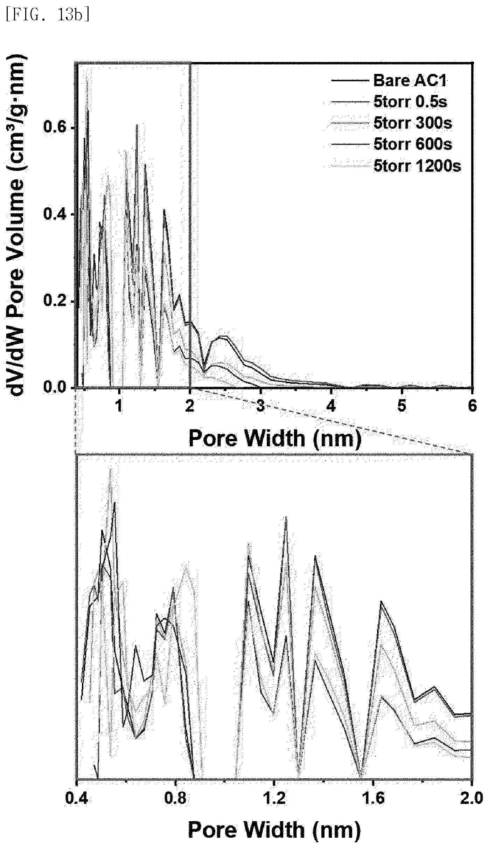

In addition, in the graph of FIG. 13a and FIG. 13b analyzed through the NLDFT model, it can be confirmed that the volume of micropores and mesopores larger than 0.45 nm is effectively reduced, and the volume of ultra-micropores smaller than 0.45 nm is maintained. It was found that pore size control was possible even with fewer cycle processes of 5 cycles because the reactants could be efficiently injected into the interior when the impregnation process was introduced, and it was found that pore size control was possible by changing the impregnation pressure and impregnation time.

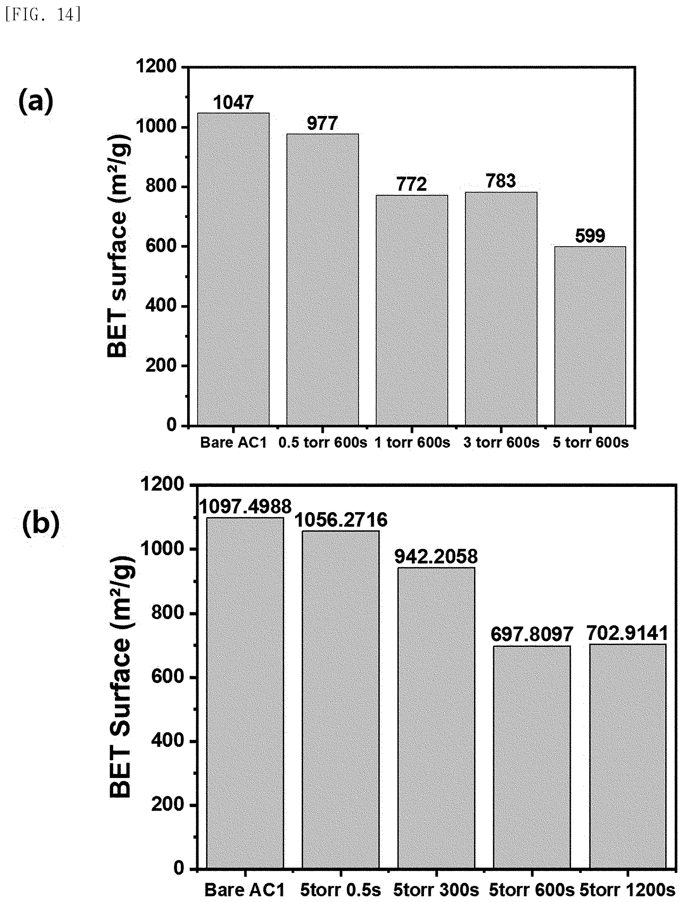

It was confirmed that the BET surface area of FIGS. 14a and 14b also showed that the surface area of the modified activated carbon was reduced compared to that of the unmodified activated carbon. In addition, it was confirmed that the surface area decreased as the impregnation pressure and impregnation time increased.

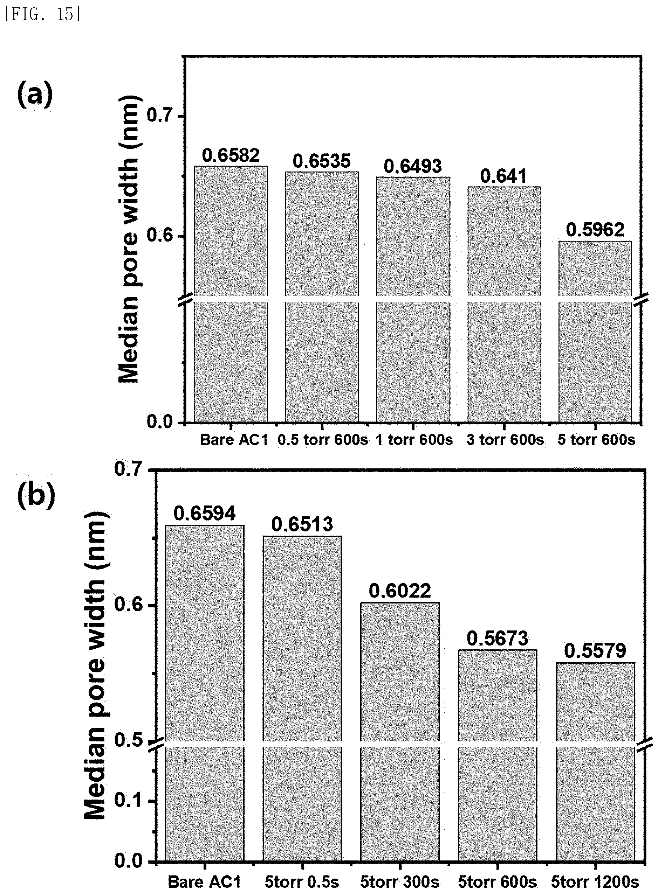

In particular, when comparing Experimental Example 2 and this Experimental Example 3, it was confirmed that the BET surface area decreased somewhat, including the impregnation step, even though the number of cycles was reduced (see FIG. 15). In addition, a decrease in pore width was observed as the impregnation pressure and impregnation time increased, and it was confirmed that the pore width decrease compared to the unperformed (Bare AC1) was minimal when the impregnation time was 0.5 seconds.

**Experimental Example 4: Confirmation of Selectivity of Gas Adsorption**

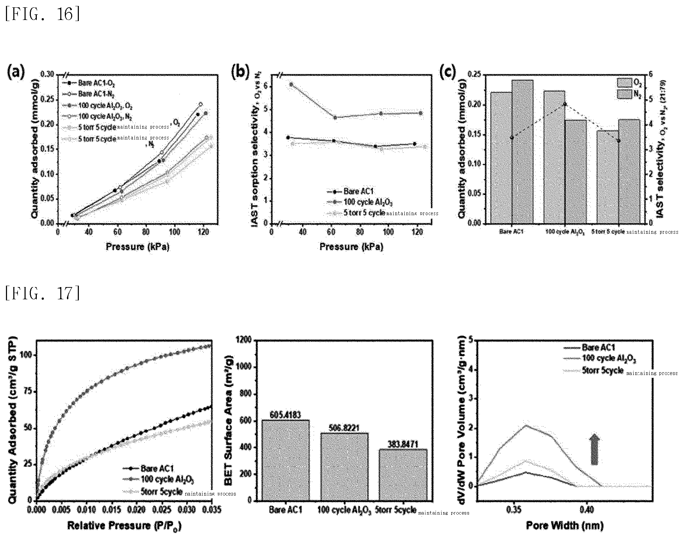

The adsorption, IAST selectivity, i.e., adsorption selectivity and adsorption quantity of unmodified activated carbon, modified activated carbon after performing 5 cycles including the impregnation step, and modified activated carbon after performing 100 cycles of the experimental example cycle not including the impregnation step of Experimental Example 1 were compared. In this experiment, the adsorption selectivity of $O_2$ gas over $N_2$ gas was confirmed as shown in FIG. 16.

According to FIG. 16, the adsorption selectivity of the activated carbon modified by performing 100 cycles without including the impregnation step of Experimental Example 1 was the highest, and the activated carbon modified by performing 5 cycles including the impregnation step showed an adsorption selectivity similar to that of the unmodified activated carbon.

In addition, more specific inferences could be made from the BET results using $CO_2$ in FIG. 17. The ultra-micropore region of less than 0.4 nm, which cannot be measured due to the size of $N_2$ and Ar gas molecules, can be observed using $CO_2$. The results of ALD 100 cycles showed an increase in 0.36 nm size micropore volume of compared to 5 cycles including the impregnation process. This is because in a process that includes an impregnation process, large pores become smaller while small pores also become smaller, but in a process that does not include an impregnation process, large pores become smaller and ultra-micropores of 0.36 nm are created, and existing ultra-micropores are not greatly affected by the process.

**Experimental Example 5: Confirmation of physical properties according to precursor injection time and purging time control**

The experiment was conducted in the same manner as the experimental example cycle above, except that the precursor injection times of (step 1) and (step 3) and the purging times of (step 2) and (step 4) were controlled as shown in the table below. Activated carbon was modified by performing 100 cycles with controlled precursor injection time and purging time, and the gas adsorption quantity, pore volume distribution according to pore width, BET surface area, and H-K median pore width were confirmed.

[Table 1]

| Classification | (Step 1) First precursor injection time | (Step 2) Purging time | (Step 3) Second precursor injection time | (Step 4) Purging time |
|---|---|---|---|---|
| 2-60-2-60 (Experimental example cycle) | 2 seconds | 60 seconds | 2 seconds | 60 seconds |
| 0.5-30-0.5-30 | 0.5 seconds | 30 seconds | 0.5 seconds | 30 seconds |
| 1-30-1-30 | 1 seconds | 30 seconds | 1 seconds | 30 seconds |
| 2-30-2-30 | 2 seconds | 30 seconds | 2 seconds | 30 seconds |
| 5-30-5-30 | 5 seconds | 30 seconds | 5 seconds | 30 seconds |

The classification in Table 1 above was used identically in the graph below.

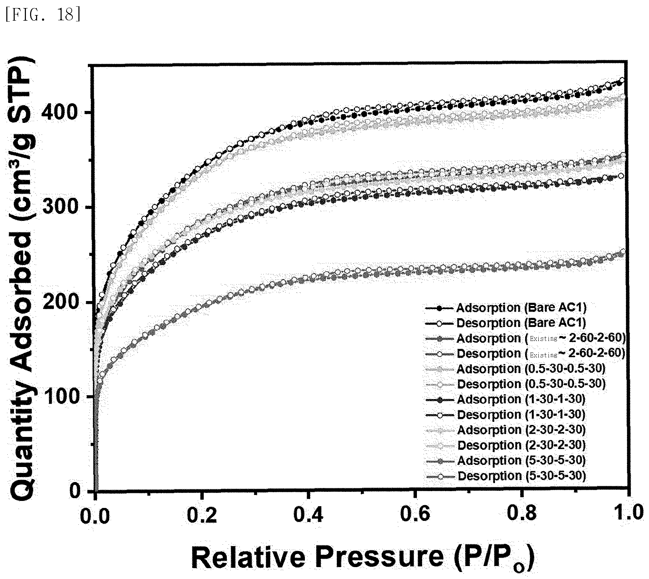

According to FIG. 18, it was confirmed that the quantity of gas adsorbed decreased as the introduction time of the first precursor and the second precursor increased. In this case, when the precursor introduction time was 0.5 seconds, the difference in the quantity of gas adsorbed compared to when not performed (Bare AC1) was minimal.

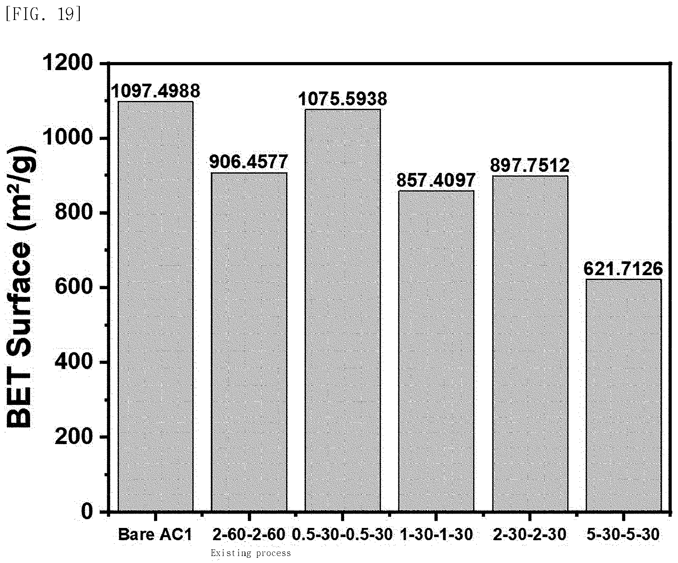

Looking at the BET surface area graph of FIG. 19, it was confirmed that the surface area was hardly affected by an increase in purging time, but when the precursors were introduced for a certain period of time or longer, the surface area decreased rapidly, and accordingly, the gas adsorption quantity decreased (5-30-5-30). And, when the precursor introduction time was 0.5 seconds, the difference in surface area compared to when not performed (Bare AC1) was minimal.

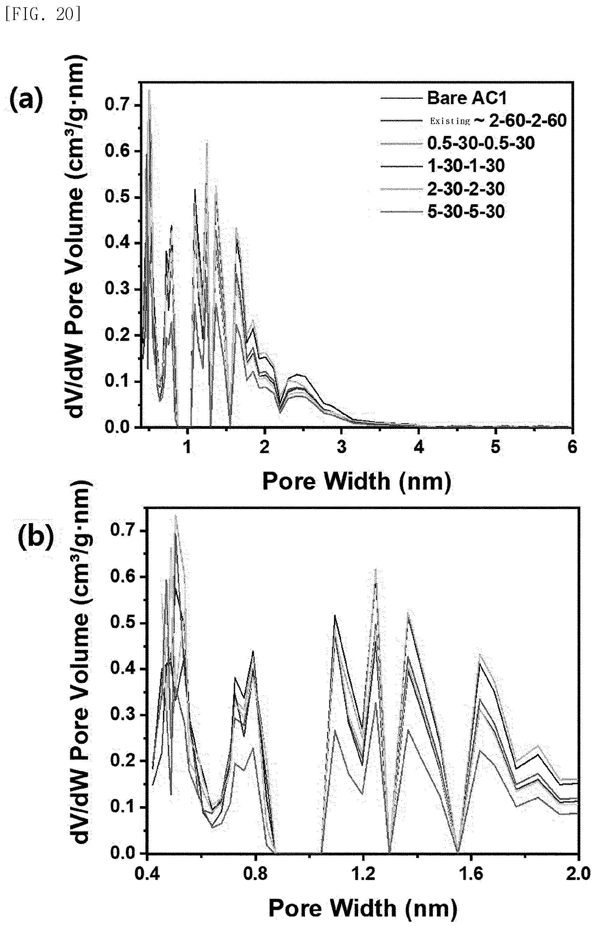

Also, the change in pore width, like BET, was not greatly affected by the change in purging time. Looking at the results of FIG. 20a and FIG. 20b, when the purging time was shortened to 30 seconds compared to the existing 2-60-2-60 cycle, a smaller pore size due to the residual precursors was observed. In addition, when the precursor injection time was reduced to 0.5 seconds, the difference from Bare AC1 was minimal, and when the precursor injection time was increased to 5 seconds, a larger pore size reduction was observed, confirming that the precursor injection time had a greater effect on the deposition pattern.

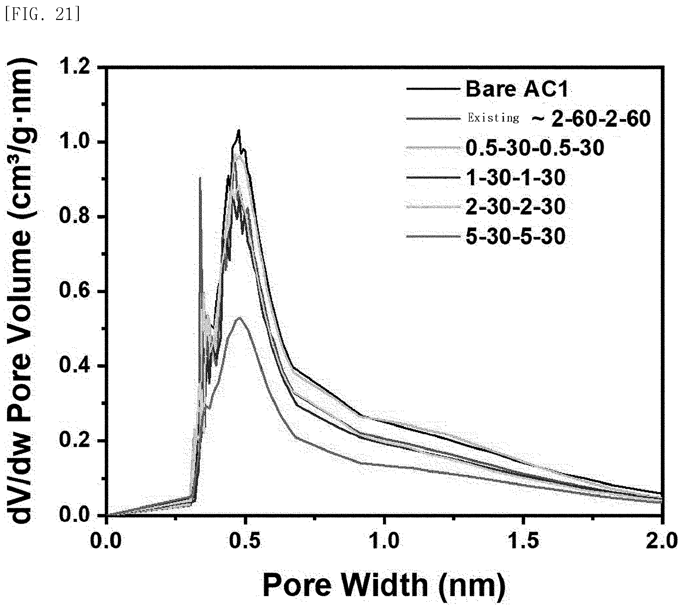

The analysis of the results based on the H-K model of the graph of FIG. 21 also confirmed that, similar to the NLDFT results above, more ALD film deposition occurred as the precursor injection time increased rather than due to the change in purging time.

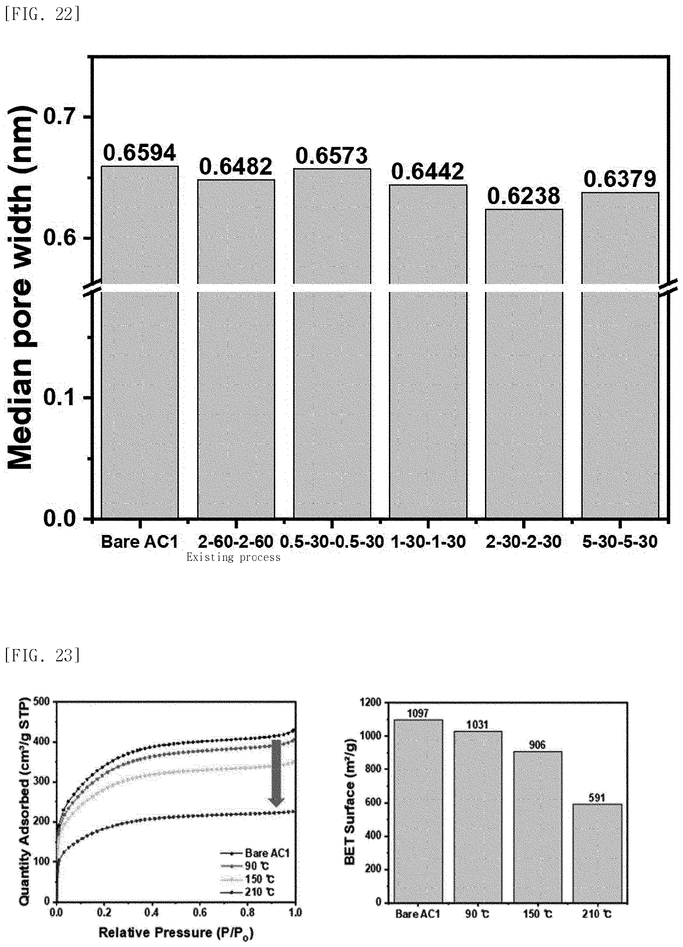

The H-K median pore width calculation results of FIG. 22 showed that the average pores decreased as the purging time decreased and the precursor injection time increased, but, in the case of 5-30-5-30, the pores smaller than 0.5 nm also decreased in size due to excessive deposition, and the overall down shift of the pores decreased the pore size reduction effect. Also, for 0.5-30-0.5-30, the difference from Bare AC1 was minimal.

**Experimental Example 6: Confirmation of physical properties according to substrate temperature**

The experiment was performed in the same manner as the above experimental example cycle, but the substrate temperature was changed to 90°C, 150°C, and 210°C. The gas adsorption quantity, pore volume distribution according to pore width, BET surface area, and H-K median pore width of the activated carbon modified by performing this cycle 100 times were confirmed, respectively.

Looking at the BET surface area graph of FIG. 23, it was confirmed that the surface area tended to decrease as the substrate temperature increased, and likewise, the gas adsorption quantity decreased.

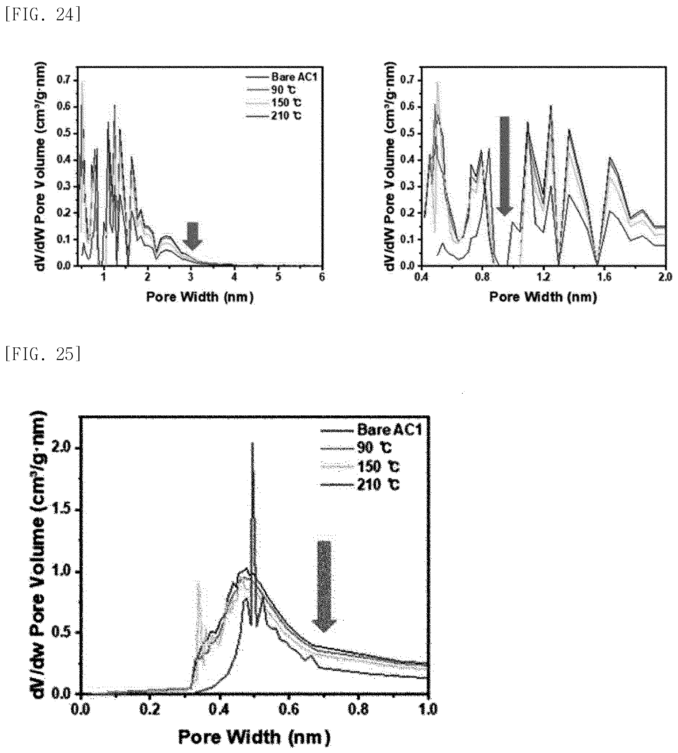

Both the pore size analysis results based on the NLDFT model (FIG. 24) and the H-K model (FIG. 25) clearly confirmed a decrease in pore size was observed as the substrate temperature increased, and in particular, a remarkable decrease in micropores was observed when the experiment was performed under the experimental conditions of 210°C.

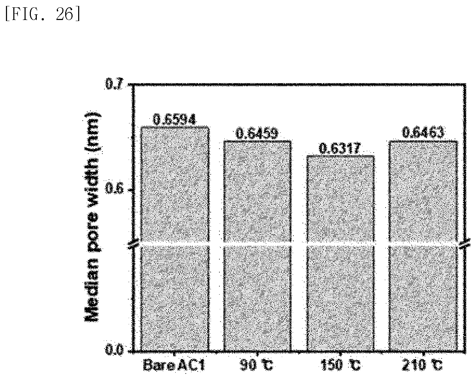

As a result of calculating the H-K median pore width in Fig. 26, it was confirmed that the overall pore size decreased with increasing temperature up to 150°C, but in the case of 210°C, the pores less than 0.5 nm also became smaller due to excessive deposition, and the overall down shift of the pores led to a decrease in the pore size reduction effect.

**Claims**

1. A method for modifying a carbon molecular sieve, the method performing a cycle 2 or more times, the cycle comprising:

   introducing a carbon molecular sieve and first precursors into a reaction chamber, thereby forming a first precursor multilayer in which at least a portion of the first precursors is adsorbed into pores of the carbon molecular sieve (step 1);
   purging the inside of the reaction chamber to remove unadsorbed first precursors from the first precursor multilayer to form a first precursor monolayer (step 2);
   introducing second precursors into the reaction chamber to react the first precursor monolayer with at least a portion of the second precursors to form a composite layer (step 3); and
   purging the inside of the reaction chamber to remove unreacted second precursors from the composite layer to form an inorganic thin film (step 4).

2. The method for modifying a carbon molecular sieve of claim 1,
   wherein the step 1 comprises:

   introducing a carbon molecular sieve and first precursors into a reaction chamber (step 1-1); and
   impregnating the first precursors into the carbon molecular sieve to form a first precursor multilayer having at least a portion of the first precursors adsorbed thereon (step 1-2).

3. The method for modifying a carbon molecular sieve of claim 1,
   wherein the step 3 comprises:

   introducing second precursors into the reaction chamber (step 3-1); and
   impregnating the second precursors into a carbon molecular sieve in which a first precursor monolayer is formed in pores thereof, thereby forming a composite layer in which the first precursor monolayer and at least a portion of the second precursors are reacted (step 3-2).

4. The method for modifying a carbon molecular sieve of claim 2, wherein in the step 1-2, the time for impregnating the first precursors is 1 to 630 seconds and the pressure is 1 to 10 torr.

5. The method for modifying a carbon molecular sieve of claim 3, wherein in the step 3-2, the time for impregnating the second precursors is 1 to 630 seconds and the pressure is 1 to 10 torr.

6. The method for modifying a carbon molecular sieve of claim 1, wherein in the step 1, the introduction of the first precursors is performed for 1 to 600 seconds.

7. The method for modifying a carbon molecular sieve of claim 1, wherein in the step 3, the introduction of the second precursors is performed for 1 to 600 seconds.

8. The method for modifying a carbon molecular sieve of claim 1, wherein the purging of the steps 2 and 4 is performed independently for 1 to 600 seconds, respectively.

9. The method for modifying a carbon molecular sieve of claim 1, wherein during the above cycle, the temperature of the carbon molecular sieve is maintained at 80 to 300°C.

10. The method for modifying a carbon molecular sieve of claim 1, wherein the first precursor comprises at least one selected from the group consisting of trimethyl aluminum, diethylzinc, zinc acetate, tetrakis(dimethylamino)tin(IV), butoxytris(ethylmethylamido)hafnium, titanium isopropoxide, and diisopropylaminosilane.

11. The method for modifying a carbon molecular sieve of claim 1, wherein the second precursor comprises at least one selected from the group consisting of $H_2O$, $O_3$, $H_2O$ plasma, $O_3$ plasma, and $O_2$ plasma.

12. The method for modifying a carbon molecular sieve of claim 1, wherein in one or more of the steps 2 and 4, the gas used for purging comprises nitrogen ($N_2$) or argon (Ar).

13. The method for modifying a carbon molecular sieve of claim 1, wherein the cycle is performed 2 to 320 cycles.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

(a)

(b)

[FIG. 13a]

[FIG. 13b]

[FIG. 14]

[FIG. 15]

(a)

(b)

[FIG. 16]

[FIG. 17]

[FIG. 18]

[FIG. 19]

[FIG. 20]

[FIG. 21]

[FIG. 22]

[FIG. 23]

[FIG. 24]

[FIG. 25]

[FIG. 26]

## INTERNATIONAL SEARCH REPORT

| International application No. |
|---|
| **PCT/KR2023/015797** |

**A. CLASSIFICATION OF SUBJECT MATTER**

**C01B 32/306**(2017.01)i; **C01B 32/372**(2017.01)i; **B01J 20/30**(2006.01)i; **B01J 20/20**(2006.01)i

According to International Patent Classification (IPC) or to both national classification and IPC

**B. FIELDS SEARCHED**

Minimum documentation searched (classification system followed by classification symbols)

C01B 32/306(2017.01); B01J 20/28(2006.01); B01J 23/42(2006.01); B01J 37/02(2006.01); B22F 9/24(2006.01); B22F 9/30(2006.01); B27K 3/02(2006.01); B27K 3/16(2006.01); C23C 16/04(2006.01); C23C 16/16(2006.01); C23C 16/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소분자체(carbon molecular sieve), 전구체(precursor), 기공(pore), 무기 박막 (inorganic thin film), 개질(modify)

**C. DOCUMENTS CONSIDERED TO BE RELEVANT**

| Category* | Citation of document, with indication, where appropriate, of the relevant passages | Relevant to claim No. |
|---|---|---|
| X | US 2021-0381103 A1 (INGEVITY SOUTH CAROLINA, LLC) 09 December 2021 (2021-12-09) See claims 22-29; and paragraphs [0077]-[0088]. | 1-3,10-13 |
| Y | | 4-9 |
| Y | KR 10-2021-0125226 A (HANWHA SOLUTIONS CORPORATION et al.) 18 October 2021 (2021-10-18) See claims 1-11; and paragraphs [0044]-[0061]. | 4-9 |
| A | KR 10-2020-0025722 A (INDUSTRIAL COOPERATION FOUNDATION JEONBUK NATIONAL UNIVERSITY et al.) 10 March 2020 (2020-03-10) See entire document. | 1-13 |
| A | KR 10-2014-0102356 A (KOREA RESEARCH INSTITUTE OF CHEMICAL TECHNOLOGY) 22 August 2014 (2014-08-22) See entire document. | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 January 2024** | **22 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/015797** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2012-0058723 A (KONKUK UNIVERSITY INDUSTRIAL COOPERATION CORP. et al.) 08 June 2012 (2012-06-08)<br>    See entire document. | 1-13 |

Form PCT/ISA/210 (second sheet) (July 2022)

**EP 4 603 449 A1**

<table>
<tr><td colspan="2" align="center">INTERNATIONAL SEARCH REPORT<br>Information on patent family members</td><td colspan="2">International application No.<br><br>**PCT/KR2023/015797**</td></tr>
</table>

| Patent document<br>cited in search report | Publication date<br>(day/month/year) | Patent family member(s) | | Publication date<br>(day/month/year) |
|---|---|---|---|---|
| US 2021-0381103 A1 | 09 December 2021 | BR | 112022024821 A2 | 21 March 2023 |
| | | CA | 3181437 A1 | 09 December 2021 |
| | | CN | 116157201 A | 23 May 2023 |
| | | EP | 4162097 A1 | 12 April 2023 |
| | | JP | 2023-528480 A | 04 July 2023 |
| | | KR | 10-2023-0022430 A | 15 February 2023 |
| | | WO | 2021-248069 A1 | 09 December 2021 |
| KR 10-2021-0125226 A | 18 October 2021 | EP | 4134162 A1 | 15 February 2023 |
| | | KR | 10-2522111 B1 | 14 April 2023 |
| | | WO | 2021-206356 A1 | 14 October 2021 |
| KR 10-2020-0025722 A | 10 March 2020 | KR | 10-2097549 B1 | 07 April 2020 |
| KR 10-2014-0102356 A | 22 August 2014 | KR | 10-1675457 B1 | 14 November 2016 |
| | | WO | 2014-126296 A1 | 21 August 2014 |
| KR 10-2012-0058723 A | 08 June 2012 | KR | 10-1230951 B1 | 07 February 2013 |

Form PCT/ISA/210 (patent family annex) (July 2022)